# EUROPEAN PATENT SPECIFICATION

(11) **EP 3 950 354 B1**
(45) Date of publication and mention of the grant of the patent: **13.08.2025**
(21) Application number: 19922209.2
(22) Date of filing: 29.11.2019
(51) Int. Cl.: C09D 11/104, C09D 11/328, B41J 2/01, B41M 5/00, D06P 5/30

(54) **AQUEOUS COMPOSITION FOR INKJET AND METHOD FOR PRODUCING RECORDED MATTER**
WÄSSRIGE ZUSAMMENSETZUNG FÜR TINTENSTRAHLDRUCKER UND VERFAHREN ZUR HERSTELLUNG VON AUFGEZEICHNETEN STOFFEN
COMPOSITION AQUEUSE POUR JET D'ENCRE ET PROCÉDÉ DE PRODUCTION DE MATIÈRE ENREGISTRÉE

(30) Priority: 27.03.2019 JP 2019060138
(43) Date of publication of application: 09.02.2022
(73) Proprietor: Seiko Epson Corporation, Tokyo 160-8801 (JP)
(72) Inventor: YAMAZAKI, Soichi, Suwa-shi Nagano 392-8502 (JP); TOYODA, Naoyuki, Suwa-shi Nagano 392-8502 (JP); KUMETA, Hiroaki, Suwa-shi Nagano 392-8502 (JP); TANIGUCHI, Manabu, Suwa-shi Nagano 392-8502 (JP); UCHIZONO, Shunsuke, Suwa-shi Nagano 392-8502 (JP)
(74) Representative: Lewis Silkin LLP
(86) International application number: PCT/JP2019/046776
(87) International publication number: WO 2020/194875

(56) References cited:
- EP-A1- 0 351 328
- EP-A1- 2 873 532
- WO-A1-98/14524
- JP-A- 2017 171 907
- JP-A- H07 102 200
- JP-A- H08 253 729
- US-A- 5 028 262

## Description

### Technical Field

The present invention relates to an aqueous ink jet composition and a method for producing a recording.

### Background Art

In recent years, ink jet printing has been used in a wider range of applications. Besides business and home printers, the technology is now applied to areas such as commercial printing and textile printing.

Against this background, ink jet inks that contain a sublimation dye, i.e., a dye that sublimates, or a disperse dye are also used.

Examples of such ink jet inks include direct printing, in which the ink is attached to the recording medium to be dyed and then the dye is fixed by heating, such as steaming, and thermal-transfer printing, in which dye ink is attached to an intermediate transfer medium and then, with the use of heat, the dye is sublimated and transferred from the intermediate transfer medium to the recording medium to be dyed (e.g., see PTL 1).

### Citation List

### Patent Literature

PTL 1: Japanese Unexamined Patent Application Publication No. 10-58638 Summary of Invention

WO 98/14524 discloses an ink composition comprising water, a water-dissipatable polyester, a disperse dye or a solvent soluble dye or a mixture of such dyes, a water-immiscible organic solvent and a water miscible organic solvent. The ink can be used in ink jet printers.

US 5028262 and EP 0351328 are also relevant.

### Technical Problem

Producing a strong color, however, requires a polyester surface on the recording medium, and this has limited the range of recording media that can be used. Heating at an increased temperature can improve the strength of the color produced by the sublimation or disperse dye, but with certain types of recording media, it can cause an unwanted discoloration, for example caused by the melting or burning of the recording medium itself.

### Solution to Problem

The present invention was made to solve the above problem.

An aqueous ink jet composition according to the present invention is defined in claim 1.

Preferably, the polyester content of the aqueous ink jet composition is 5% by mass or more and 30% by mass or less.

Preferably, the dye content of the aqueous ink jet composition is 0.1% by mass or more and 7.5% by mass or less.

Preferably, the dye content of the aqueous ink jet composition is 0.1% by mass or more and 3% by mass or less.

Preferably, the polyester in the aqueous ink jet composition is contained in particulate form, and
an average diameter of particles of the polyester is 20 nm or more and 300 nm or less.

A method according to the present invention is defined in claim 6.

Preferably, the recording medium in the method for producing a recording is a piece of fabric.

Preferably, the recording medium in the method for producing a recording is one made of at least one material including one or two or more selected from the group consisting of silk, wool, cellulose, acrylic, polyurethane, and polyamide.

Preferably, the recording medium in the method for producing a recording is one made of materials including polyester and one or two or more selected from the group consisting of cotton, silk, polyamide, acrylic, and polyurethane.

Preferably, in the method for producing a recording, a temperature at which the recording medium is heated in the heating step is 100°C or more and 160°C or less.

### Description of Embodiments

The following describes preferred embodiments of the present invention in detail.

### <Aqueous Ink Jet Composition>

An aqueous ink jet composition according to the present invention contains at least one dye composed of at least one disperse dye comprising C.I. Disperse Orange 60, polyester, and water. The polyester content of the aqueous ink jet composition is higher than or equal to 4 times and lower than or equal to 300 times the dye content.

By satisfying such conditions, an aqueous ink jet composition that produces a strong color with a wide variety of recording media can be provided. Of particular note is that the composition produces a strong color even when the recording medium is heated at a relatively low temperature for a relatively short period of time. The composition is therefore suitable even for use with recording media vulnerable to heat, such as those made of a material that melts or undergoes an unwanted discoloration upon heating at a relatively low temperature, providing more flexibility in the selection of the recording medium. With its capability to produce a strong color even when the recording medium is heated at a relatively low temperature for a relatively short period of time, the composition is also advantageous in terms of energy conservation and improving productivity in manufacturing recordings. As stated, the ratio of the polyester content to the dye content is relatively high, ensuring that even when a recording produced using the aqueous ink jet composition is heated, for example by laundering or washing with warm water, heat drying in a dryer, or ironing, unwanted spread of the dye out of the recording is prevented effectively. The aqueous ink jet composition according to the present invention can be applied to methods for producing a recording in which there is no transfer step, as in the method described in detail later herein, and, therefore, is also favorable in terms of improving productivity in manufacturing recordings, reducing the cost of producing recordings, resource conservation, etc.

The inventors believe such great advantages owe to reasons such as the one that follows. That is, whereas disperse dyes have a tendency to diffuse when heated, polyesters have ester linkages in their backbone, and when polyester is heated, some of the ester linkages decompose and break into carboxyl groups and hydroxyl groups. When the polyester is cooled, the carboxyl and hydroxyl groups recombine together. Heating polyester and at least one of disperse dyes present close to each other, therefore, makes the disperse dye go into a state of single molecules as a result of diffusion, and then cooling them fixes the single-molecule state of the sublimation or disperse dye inside the polyester. As a result, the inventors believe, the dye produces a strong color. Since the disperse dye goes into a state of single molecules even when its distance of travel is short compared with that in the known sublimation transfer, furthermore, the color produced is sufficiently strong even with a relatively short heating at a relatively low temperature.

In addition, disperse dyes produce strong colors in their single-molecule state. When multiple molecules aggregate together, the color strength is very poor compared with that of single molecules, even if the dye content is high.

In the present invention, the inventors found that what is crucial to bringing a disperse dye comprising C.I. Disperse Orange 60 into a state of single molecules efficiently is the aforementioned polyester-to-dye ratio, and based on this finding the inventors arrived at the present invention.

When the above conditions are not satisfied, the results are unsatisfactory.

For example, if the aqueous ink jet composition were polyester-free, it would be difficult to increase the percentage of disperse dye in its single-molecule state sufficiently high except with a recording medium having a polyester surface. The color produced would therefore be unsatisfactorily strong.

If the aqueous ink jet composition contained polyester but with the ratio of the dye content to the polyester content of the aqueous ink jet composition below the specified lower limit, too, it would be difficult to increase the percentage of disperse dye in its single-molecule state sufficiently high except with a recording medium having a polyester surface. The color produced would therefore be unsatisfactorily strong.

If the aqueous ink jet composition contained polyester but with the ratio of the dye content to the polyester content of the aqueous ink jet composition exceeding the specified upper limit, it would be difficult to increase the optical density of the dye print sufficiently high because the dye content itself would be low.

Simply adding polyester to a known sublimation transfer ink does not deliver such great advantages. That is, ordinary sublimation transfer inks typically contain a relatively high percentage of dye, 3% to 5% by mass, and allowing a relatively high percentage of polyester in such an ink is contrary to common practice. Making ink with 4 to 300 times more polyester than its dye content as in the present invention is not obvious to those skilled in the art.

As mentioned herein, an aqueous ink jet composition refers not only to ink itself ejected by ink jet technology but also to undiluted solution from which the ink is prepared. In other words, an aqueous ink jet composition according to the present invention may be one that is ejected by ink jet technology directly or may be one that is ejected by ink jet technology after dilution or any other treatment. As mentioned herein, an aqueous ink jet composition is one that contains at least water as its major volatile liquid component. Preferably, the percentage of water in the volatile liquid component of the aqueous ink jet composition is 40% by mass or more, more preferably 50% by mass or more, even more preferably 70% by mass or more.

As stated, the polyester content of the aqueous ink jet composition only needs to be higher than or equal to 4 times and lower than or equal to 300 times the dye content. Preferably, the lower limit to the polyester content is 8 times, more preferably 10 times, even more preferably 20 times the dye content. Preferably, the upper limit to the polyester content is 300 times, more preferably 200 times, even more preferably 100 times the dye content.

This makes the above and other advantages more significant.

### [Specific Dye]

The aqueous ink jet composition according to the present invention contains at least one dye composed of at least one of disperse dyes comprising C.I. Disperse Orange 60. In the following description, these types of dyes are also referred to as "specific dyes."

In general, specific dyes produce strong colors with polyester. With other types of recording media, such as those made of wool, cellulose, cotton, silk, polyester, polyamide, acrylic, polyurethane, etc., however, their color is weaker.

For yellow sublimation or disperse dyes, examples include C.I. Disperse Yellow 1, 3, 4, 5, 7, 9, 13, 23, 24, 30, 33, 34, 42, 44, 49, 50, 51, 54, 56, 58, 60, 61, 63, 64, 66, 68, 71, 74, 76, 79, 82, 83, 85, 86, 88, 90, 91, 93, 98, 99, 100, 104, 108, 114, 116, 118, 119, 122, 124, 126, 135, 140, 141, 149, 154, 160, 162, 163, 164, 165, 179, 180, 182, 183, 184, 186, 192, 198, 199, 201, 202, 204, 210, 211, 215, 216, 218, 224, 227, 231, and 232, although any kind of dye can be used.

For orange sublimation or disperse dyes, examples include C.I. Disperse Orange 1, 3, 5, 7, 11, 13, 17, 20, 21, 25, 29, 30, 31, 32, 33, 37, 38, 42, 43, 44, 45, 46, 47, 48, 49, 50, 53, 54, 55, 56, 57, 58, 59, 60, 61, 66, 71, 73, 76, 78, 80, 89, 90, 91, 93, 96, 97, 119, 127, 130, 139, and 142, although any kind of dye can be used.

For red sublimation or disperse dyes, examples include C.I. Disperse Red 1, 4, 5, 7, 11, 12, 13, 15, 17, 27, 43, 44, 50, 52, 53, 54, 55, 56, 58, 59, 60, 65, 72, 73, 74, 75, 76, 78, 81, 82, 86, 88, 90, 91, 92, 93, 96, 103, 105, 106, 107, 108, 110, 111, 113, 117, 118, 121, 122, 126, 127, 128, 131, 132, 134, 135, 137, 143, 145, 146, 151, 152, 153, 154, 157, 159, 164, 167, 169, 177, 179, 181, 183, 184, 185, 188, 189, 190, 191, 192, 200, 201, 202, 203, 205, 206, 207, 210, 221, 224, 225, 227, 229, 239, 240, 257, 258, 277, 278, 279, 281, 288, 298, 302, 303, 310, 311, 312, 320, 324, and 328, although any kind of dye can be used.

For violet sublimation or disperse dyes, examples include C.I. Disperse Violet 1, 4, 8, 23, 26, 27, 28, 31, 33, 35, 36, 38, 40, 43, 46, 48, 50, 51, 52, 56, 57, 59, 61, 63, 69, and 77, although any kind of dye can be used.

For green sublimation or disperse dyes, an example is C.I. Disperse Green 9, although any kind of dye can be used.

For brown sublimation or disperse dyes examples include C.I. Disperse Brown 1, 2, 4, 9, 13, and 19, although any kind of dye can be used.

For blue sublimation or disperse dyes, examples include C.I. Disperse Blue 3, 7, 9, 14, 16, 19, 20, 24, 26, 27, 35, 43, 44, 54, 55, 56, 58, 60, 62, 64, 71, 72, 73, 75, 79, 81, 82, 83, 87, 91, 92, 93, 94, 95, 96, 102, 106, 108, 112, 113, 115, 118, 120, 122, 125, 128, 130, 139, 141, 142, 143, 146, 148, 149, 153, 154, 158, 165, 167, 171, 173, 174, 176, 181, 183, 185, 186, 187, 189, 197, 198, 200, 201, 205, 207, 211, 214, 224, 225, 257, 259, 267, 268, 270, 284, 285, 287, 288, 291, 293, 295, 297, 301, 315, 330, 333, 359, and 360, although any kind of dye can be used.

For black sublimation or disperse dyes, examples include C.I. Disperse Black 1, 3, 10, and 24, although any kind of dye can be used.

The specific dye is a disperse dye or may be a combination of two or more and comprises C.I. Disperse Orange 60

This helps further intensify the color of the dye print of the recording. The color produced, furthermore, will be sufficiently strong even with shorter heating at a lower temperature.

Preferably, the lower limit to the specific dye content of the aqueous ink jet composition is 0.1% by mass, more preferably 0.15% by mass, even more preferably 0.2% by mass. Preferably, the upper limit to the specific dye content of the aqueous ink jet composition is 7.5% by mass, more preferably 3% by mass, even more preferably 2.4% by mass.

This helps bring the specific dye in the dye print into a state of single molecules better. The optical density, furthermore, will be further increased.

### [Polyester]

The aqueous ink jet composition according to the present invention contains polyester.

In general, polyesters can be dyed well with specific dyes as defined above.

The polyester as a component the aqueous ink jet composition according to the present invention can be any polymer material that has ester linkages in its backbone, which means the polyester may be, for example, a modified polyester.

Examples of commercially available polyesters that can be used to prepare the aqueous ink jet composition according to the present invention include The Nippon Synthetic Chemical's POLYESTER, GOO Chemical's PLAS COAT, Toagosei's ARON MELT, Unitika's elitel, Takamatsu Oil & Fat's PESRESIN, DKS's SUPERFLEX, Toyobo's Vylonal, and Tosoh's NIPPOLAN polyester polyols. When a polyester commercially available as a dispersion in water is used, the polyester content is adjusted so that the polyester content on a solids basis will satisfy the relationship specified above.

Preferably, the lower limit to the acid value of the polyester as a component of the aqueous ink jet composition according to the present invention is 1.0 KOH mg/g, more preferably 1.5 KOH mg/g, even more preferably 2.0 KOH mg/g. Preferably, the upper limit to the acid value of the polyester as a component of the aqueous ink jet composition according to the present invention is 15 KOH mg/g, more preferably 10 KOH mg/g, even more preferably 5.0 KOH mg/g.

This helps further intensify the color of the specific dye with a wide variety of recording media.

Preferably, the lower limit to the hydroxyl value of the polyester as a component of the aqueous ink jet composition according to the present invention is 1.0 KOH mg/g, more preferably 2.0 KOH mg/g, even more preferably 3.0 KOH mg/g. Preferably, the upper limit to the hydroxyl value of the polyester as a component of the aqueous ink jet composition according to the present invention is 20 KOH mg/g, more preferably 15 KOH mg/g, even more preferably 10 KOH mg/g.

This helps further intensify the color of the specific dye with a wide variety of recording media.

Preferably, the lower limit to the number-average molecular weight of the polyester as a component of the aqueous ink jet composition according to the present invention is 3000, more preferably 6000, even more preferably 10000. Preferably, the upper limit to the number-average molecular weight of the polyester as a component of the aqueous ink jet composition according to the present invention is 25000, more preferably 20000, even more preferably 18000.

This helps further intensify the color of the specific dye with a wide variety of recording media.

The polyester may be in any form in the aqueous ink jet composition. For example, the polyester in the aqueous ink jet composition may be contained dissolved or may be contained dispersed, for example in the colloidal or emulsified state. Alternatively, the polyester may be contained in the gel state. In the aqueous ink jet composition, the polyester may cover at least part of the surface of the specific dye. These states may coexist.

When the aqueous ink jet composition is one that contains polyester in particulate form, it is preferred that the lower limit to the average diameter of particles of the polyester be 20 nm, more preferably 40 nm, even more preferably 60 nm. Preferably, the upper limit to the average diameter of particles of the polyester is 300 nm, more preferably 250 nm, even more preferably 200 nm.

This makes it easier to prepare the aqueous ink jet composition, and this also helps improve the dispersion stability of the polyester in the aqueous ink jet composition, the storage stability of the aqueous ink jet composition, and the stability of ink jet ejection of the aqueous ink jet composition. After the aqueous ink jet composition is attached to a recording medium, furthermore, the specific dye in its single-molecule state will adsorb better and therefore produce an even stronger color.

As mentioned herein, an average diameter of particles refers to the volume-average diameter of the particles unless stated otherwise. The average diameter of particles can be determined by, for example, measurement using Microtrac UPA (Nikkiso).

Preferably, the lower limit to the polyester content of the aqueous ink jet composition is 2% by mass, more preferably 5% by mass, even more preferably 10% by mass. Preferably, the upper limit to the polyester content of the aqueous ink jet composition is 40% by mass, more preferably 30% by mass, even more preferably 20% by mass.

This helps improve the storage stability of the aqueous ink jet composition and the stability of ink jet ejection of the aqueous ink jet composition. The color strength of the specific dye and the optical density of the dye print will also become even better.

### [Water]

The aqueous ink jet composition contains water. The water may be, for example, purified water, such as RO water, distilled water, or deionized water.

The lower limit to the water content of the aqueous ink jet composition is not critical, but preferably is 30% by mass, more preferably 35% by mass, even more preferably 40% by mass. The upper limit to the water content of the aqueous ink jet composition is not critical, but preferably is 85% by mass, more preferably 80% by mass, even more preferably 75% by mass.

This makes it more certain that the viscosity of the aqueous ink jet composition is adjusted to an appropriate level. The stability of ink jet ejection of the composition will therefore be further improved.

### [Nonaqueous Solvent]

The aqueous ink jet composition may contain a nonaqueous solvent.

This helps adjust the viscosity of the aqueous ink jet composition to an appropriate level, and the water retention of the aqueous ink jet composition also improves. Ink jet ejection of droplets will therefore become more stable.

Examples of nonaqueous solvents that can be contained in the aqueous ink jet composition include glycerol, propylene glycol, and 2-pyrrolidone.

The presence of these solvents helps make the ejection of droplets more stable. They reduce the rate of evaporation with their excellent water retention potential.

The lower limit to the nonaqueous solvent content of the aqueous ink jet composition is not critical, but preferably is 0% by mass, more preferably 3% by mass, even more preferably 5% by mass. The upper limit to the nonaqueous solvent content of the aqueous ink jet composition is not critical, but preferably is 30% by mass, more preferably 25% by mass, even more preferably 20% by mass.

This makes the effect of the nonaqueous solvent, described above, more significant.

### [Surfactant]

The aqueous ink jet composition may contain a surfactant.

This is advantageous in achieving better image quality. The surfactant helps improve the wettability of the aqueous ink jet composition on a recording medium.

Examples of surfactants that can be contained in the aqueous ink jet composition include surfactants such as anionic surfactants, cationic surfactants, and nonionic surfactants.

More specifically, examples of surfactants that can be contained in the aqueous ink jet composition include acetylene surfactants, silicone surfactants, and fluorosurfactants.

### [Extra Ingredient(s)]

The aqueous ink jet composition may contain ingredients other than those described above. Such ingredients may hereinafter be referred to as extra ingredients.

Examples of extra ingredients include colorants excluding specific dyes; dispersants; emulsifiers; penetrants, such as triethylene glycol monomethyl ether, triethylene glycol monobutyl ether, diethylene glycol monomethyl ether, 1,2-hexanediol, 1,2-pentanediol, 1,2-butanediol, and 3-methyl-1,5-pentanediol; drying retarders, such as triethanolamine; pH-adjusting agents; chelating agents, such as ethylenediaminetetraacetate; antimolds/preservatives; and antirusts. For antimolds/preservatives, compounds having an isothiazolin-ring structure in their molecule, for example, are suitable for use.

Preferably, the percentage of the extra ingredient(s) is 6% by mass or less, more preferably 5% by mass or less. When the composition contains multiple extra ingredients, it is preferred that their total percentage satisfy any of these conditions.

The lower limit to the surface tension at 25°C of the aqueous ink jet composition is not critical, but preferably is 20 mN/m, more preferably 21 mN/m, even more preferably 23 mN/m. The upper limit to the surface tension at 25°C of the aqueous ink jet composition is not critical, but preferably is 50 mN/m, more preferably 40 mN/m, even more preferably 30 mN/m.

This helps further improve the stability of the ejection of the aqueous ink jet composition because nozzle clogging, for example, of the ink jet ejection apparatus becomes more unlikely. Even when clogged, furthermore, the nozzles will recover better after capping, or after they are closed with caps.

The surface tension can be that measured by the Wilhelmy method. The surface tension can be measured using, for example, a surface tensiometer, such as Kyowa Interface Science's CBVP-7.

The lower limit to the viscosity at 25°C of the aqueous ink jet composition is not critical, but preferably is 2 mPa·s, more preferably 3 mPa·s, even more preferably 4 mPa·s. The upper limit to the viscosity at 25°C of the aqueous ink jet composition is not critical, but preferably is 30 mPa·s, more preferably 20 mPa·s, even more preferably 10 mPa·s.

This helps further improve the stability of the ejection of the aqueous ink jet composition.

The viscosity can be measured at 25°C, for example using a rheometer, such as Pysica's MCR-300, and by increasing the Shear Rate from 10 [s⁻¹] to 1000 [s⁻¹] and reading the viscosity at a Shear Rate of 200.

When the aqueous ink jet composition according to the present invention is ink, the ink is usually in a cartridge, bag, tank, or other container when applied to an ink jet recording apparatus. In other words, a recording apparatus according to the present invention is one that has an ink cartridge or other container with ink therein as an aqueous ink jet composition according to the present invention.

### <Method for Producing a Recording>

A method according to the present invention for producing a recording includes an attachment step, in which an aqueous ink jet composition according to the present invention as described above is ejected by ink jet technology and attached to a recording medium, and a heating step, in which the recording medium with the aqueous ink jet composition attached thereto is heated.

This is a way to produce a recording with a strong color. Of particular note is that the color is strong with a wide variety of recording media.

### [Attachment Step]

In the attachment step, an aqueous ink jet composition is ejected by ink jet technology and attached to a recording medium. The ink jet recording apparatus used to eject the aqueous ink jet composition by ink jet technology can be a known one. The ejection technique can be piezoelectric ejection, ejection of the ink with the use of bubbles produced by heating the ink, etc. Of these, piezoelectric ejection is particularly preferred, for example because of low risk of affecting the quality of the aqueous ink jet composition.

In the attachment step, multiple aqueous ink jet compositions according to the present invention may be used in combination. More specifically, multiple aqueous ink jet compositions with different specific-dye formulae, for example, may be used in combination.

In the attachment step, furthermore, ink(s) other than the aqueous ink jet composition(s) according to the present invention may also be used.

### [Recording Medium]

The material of which the recording medium is made is not critical, but examples include resin materials, such as polyurethane, polyethylene, polypropylene, polyester, polyamide, and acrylic resin, paper, glass, metal, ceramic, leather, wood, and pottery clay and fiber of at least one of them, and natural, synthetic, or semisynthetic fibers, such as silk, animal hair, cotton, hemp/linen, polyester, polyamide (nylon), acrylic, polyurethane, cellulose, linters, viscose rayon, cuprammonium rayon, and cellulose acetate, and one or a combination of two or more selected from these can be used. The recording medium may be one that has a three-dimensional shape, such as a sheet, spherical, or rectangular parallelopiped shape.

It is particularly preferred that the recording medium be a piece of fabric.

Fabric dyeing is in great demand, for example for printed T-shirts. Printing by ironing or similar means is widespread, but at the same time there is a strong need for dyeing of fabrics other than polyester fiber fabric. The advantages of the present invention, therefore, are more significant when the recording medium is a piece of fabric.

Preferably, the recording medium is one made of at least one material including one or two or more selected from the group consisting of silk, wool, cellulose, acrylic, polyurethane, and polyamide.

These materials often need to be dyed but on the other hand have been unsuitable for dyeing with disperse dyes, for example because of their maximum withstand temperature. In the present invention, however, recordings can be produced well even with a recording medium made of these materials. The advantages of the present invention, therefore, are more significant when the recording medium is one made of at least one material including one or two or more selected from the group consisting of silk, wool, cellulose, acrylic, polyurethane, and polyamide.

Fibers used in fabrics include the shaggy fibers of hemp/linen or animal hair (e.g., wool). Being shaggy, hemp/linen and animal hair are far from suitable for ink jet printing. They tend to interfere with ink ejection from nozzles because raised fibers come into contact with the ink jet head, and even when all nozzles successfully eject the ink, the ink does not adhere firmly because of many microscopic pores and irregularities the fabric has. Cotton, silk, polyester, polyamide, acrylic, and polyurethane, which are not shaggy, are fit for ink jet printing.

For this reason, it is preferred that the recording medium be one made of at least one material including one or two or more selected from the group consisting of cotton, silk, polyester, polyamide, acrylic, and polyurethane.

Furthermore, in the case of a mixture of polyester and any of these materials, or when the recording medium is one made of materials including polyester and one or two or more selected from the group consisting of cotton, silk, polyamide, acrylic, and polyurethane, the advantages of the present invention are more significant. The known processes of dyeing with sublimation or disperse dye(s) have failed to dye the fiber(s) other than polyester, i.e., have tended to result in uneven dyeing, but in the present invention, even such a mixture dyes sufficiently well.

Even with polyester, the effect of dyeing is greater than by the known processes with disperse dyes by virtue of the efficient color production in the present invention.

When the recording medium is an element made of paper, glass, ceramic, metal, wood, resin film, or any other dense resin material, especially when the recording medium is a piece of glass, a problem has become more significant: difficulty ensuring the color strength of the dye print and the adhesion between the recording medium and the dye print are sufficiently good. In the present invention, the color strength of the dye print and the adhesion between the recording medium and the dye print are sufficiently good even with such a recording medium. The advantages of the present invention, therefore, are more significant when the recording medium is an element made of paper, glass, ceramic, metal, wood, resin film, or any other dense resin material.

### [Heating Step]

Then the recording medium with the aqueous ink jet composition attached thereto is heated. The specific dye is fixed to the recording medium together with the polyester and other ingredients, and, at the same time, the specific dye produces its color well, giving a recording.

The lower limit to the heating temperature in this step is not critical, but preferably is 100°C, more preferably 105°C, even more preferably 110°C. The upper limit to the heating temperature in this step is not critical, but preferably is 180°C, more preferably 160°C, even more preferably 150°C.

This helps further improve the productivity in the manufacturing of recordings because the recording can be produced with less energy. The color strength of the resulting recording will also be further improved. Even recording media relatively vulnerable to heat are suitable for use, providing further flexibility in the selection of the recording medium. An unwanted discoloration, a change in optical density, and other events possible when the produced recording is heated, for example by laundering or washing with warm water, heat drying in a dryer, or ironing, will also be prevented well.

When the recording medium is one relatively resistant to heat, such as a piece of paper, glass, ceramic, metal, or wood, it is preferred that the upper limit to the heating temperature in this step be 250°C, more preferably 220°C, even more preferably 200°C.

The duration of heating in this step varies with the heating temperature, but preferably, the lower limit to the duration of heating in this step be 0.2 seconds, more preferably 1 second, even more preferably 5 seconds. Preferably, the upper limit to the duration of heating in this step is 300 seconds, more preferably 60 seconds, even more preferably 30 seconds.

This helps further improve the productivity in the manufacturing of recordings because the recording can be produced with less energy. The color strength of the resulting recording will also be further improved. Even recording media relatively vulnerable to heat are suitable for use, providing further flexibility in the selection of the recording medium.

This step may be performed by heating the surface of the recording medium with the aqueous ink jet composition adhering thereto with this surface spaced apart from the heater or may be performed by heating this surface with the recording medium with the aqueous ink jet composition adhering thereto and the heater in close contact with each other. Preferably, this step is performed by heating the surface of the recording medium with the aqueous ink jet composition adhering thereto with the recording medium and the heater in close contact with each other.

This helps further improve the productivity in the manufacturing of recordings because the recording can be produced with less energy. The color strength of the resulting recording will also be further improved. Accidental spread of the specific dye out of the recording medium will also be prevented more effectively.

It should be noted that although the foregoing describes preferred embodiments of the present invention, the present invention is not limited to them.

For example, the aqueous ink jet composition according to the present invention only needs to be one that is for use in ink jet ejection and does not need to be one applied to a method like that described above.

For example, the composition may be one applied to a method that includes extra steps besides steps like those described above.

An example of a pretreatment step in this case is a step of applying a coating layer to the recording medium.

An example of an intermediate treatment step is a step of preheating the recording medium. An example of a post-treatment step is a step of washing the recording medium.

The aqueous ink jet composition according to the present invention, furthermore, may be applied to a method for producing a recording medium that includes a transfer step. In other words, the aqueous ink jet composition may be applied to a method in which the composition is attached to an intermediate transfer medium, and then, by heating, the specific dye is sublimated and transferred to the recording medium to be dyed.

### EXAMPLES

The following describes specific examples of the present invention.
[1] Preparation of Ink Jet Inks Examples 1-8, 10 and 12 are Reference examples.

### (Example 1)

First, C.I. Disperse Yellow 54 as a specific dye, MD-1480 (Toyobo) as a liquid dispersion of polyester in water, glycerol, triethylene glycol monobutyl ether, triethanolamine, OLFINE E1010 (Nissin Chemical Industry) as a surfactant, and purified water were mixed in predetermined proportions, and the resulting mixture was slurried by stirring at 3000 rpm with a high-shear mixer (Silverson). The slurry produced and 0.5-mm glass beads were dispersed by stirring using a bead mill (LMZ015, Ashizawa Finetech) under water-cooled conditions. An ink jet ink as an aqueous ink jet composition was produced in this way.

The average diameter of particles of C.I. Disperse Yellow 54 in the ink jet ink was 150 nm. The acid value of the polyester in the MD-1480 was 3 KOH mg/g, the hydroxyl value of the polyester was 6 KOH mg/g, and the number-average molecular weight of the polyester was 15 × 10³.

### (Examples 2 to 12)

An ink jet ink was produced in the same way as in Example 1 above except that the kind of specific dye and the proportions of ingredients were customized to a formula as given in Table 1.

### (Comparative Examples 1 to 7)

An ink jet ink was produced in the same way as in Example 1 above except that the kind of specific dye and the proportions of ingredients were customized to a formula as given in Table 2.

The composition of the ink jet inks of the above Examples and Comparative Examples is summarized in Tables 1 and 2. In the tables, "%" means "% by mass," and C.I. Disperse Yellow 54 is expressed as "DY54," C.I. Disperse Red 60 as "DR60," C.I. Disperse Blue 360 as "DB360," C.I. Disperse Blue 359 as "DB359," C.I. Disperse Orange 25 as "DO25," C.I. Disperse Orange 60 as "DO60," polyester as "PEs," glycerol as "Gly," triethylene glycol monobutyl ether as "TEGBE," triethanolamine as "TEA," and OLFINE E1010 (Nissin Chemical Industry) as "E1010." The ink jet inks of the above Examples all had a surface tension in the range of 25 mN/m to 35 mN/m. The surface tension was measured by the Wilhelmy method at 25°C using a surface tensiometer (Kyowa Interface Science CBVP-7). In all of the above Examples, the average diameter of particles of polyester in the ink jet ink was in the range of 20 nm to 300 nm. In the tables, the polyester content column indicates the polyester content on a solids basis; the polyester content is indicated as the percentage excluding the water content of the liquid dispersion of polyester in water used for preparation.

### [Table 1]

**Table 1**

| | Specific dye | | | | | | PEs [%] | Gly [%] | TEGBE [%] | TEA [%] | E1010 [%] | Water [%] | PEs/Specific dye [ratio by weight] |
|---|---|---|---|---|---|---|---|---|---|---|---|---|---|
| | DY54 [%] | DR60 [%] | DB360 [%] | DB359 [%] | DO25 [%] | DO60 [%] | | | | | | | |
| Example 1 | 0.1 | 0 | 0 | 0 | 0 | 0 | 2 | 10.0 | 3.0 | 1.0 | 0.5 | 83.4 | 20 |
| Example 2 | 0 | 0.2 | 0 | 0 | 0 | 0 | 20 | 10.0 | 3.0 | 1.0 | 0.5 | 65.3 | 100 |
| Example 3 | 0 | 0 | 0.4 | 0 | 0 | 0 | 35 | 10.0 | 3.0 | 1.0 | 0.5 | 50.1 | 88 |
| Example 4 | 1.0 | 0 | 0 | 0 | 0 | 0 | 20 | 10.0 | 3.0 | 1.0 | 0.5 | 64.5 | 20 |
| Example 5 | 0 | 2.0 | 0 | 0 | 0 | 0 | 16 | 10.0 | 3.0 | 1.0 | 0.5 | 67.5 | 8 |
| Example 6 | 0 | 0 | 1.25 | 0 | 0 | 0 | 5 | 10.0 | 3.0 | 1.0 | 0.5 | 79.3 | 4 |
| Example 7 | 0 | 0 | 0 | 0.1 | 0 | 0 | 30 | 10.0 | 3.0 | 1.0 | 0.5 | 55.4 | 300 |
| Example 8 | 0 | 0 | 0 | 0 | 3.0 | 0 | 20 | 10.0 | 3.0 | 1.0 | 0.5 | 62.5 | 7 |
| Example 9 | 0 | 0 | 0 | 0 | 0 | 1.0 | 40 | 10.0 | 3.0 | 1.0 | 0.5 | 44.5 | 40 |
| Example 10 | 0 | 0 | 0 | 3.0 | 0 | 0 | 40 | 10.0 | 3.0 | 1.0 | 0.5 | 42.5 | 13 |
| Example 11 | 0 | 0 | 0 | 0 | 0.1 | 0.1 | 15 | 10.0 | 3.0 | 1.0 | 0.5 | 70.3 | 72 |
| Example 12 | 7.5 | 0 | 0 | 0 | 0 | 0 | 30 | 10.0 | 3.0 | 1.0 | 0.5 | 48.0 | 4 |

### [Table 2]

**Table 2**

| | Specific dye | | | | | | PEs [%] | Gly [%] | TEGBE [%] | TEA [%] | E1010 [%] | Water [%] | PEs/Specific dye [ratio by weight] |
|---|---|---|---|---|---|---|---|---|---|---|---|---|---|
| | DY54 [%] | DR60 [%] | DB360 [%] | DB359 [%] | DO25 [%] | DO60 [%] | | | | | | | |
| Comparative Example 1 | 0 | 0.05 | 0 | 0 | 0 | 0 | 16 | 10.0 | 3.0 | 1.0 | 0.5 | 69.5 | 320 |
| Comparative Example 2 | 0 | 0 | 1.0 | 0 | 0 | 0 | 0 | 10.0 | 3.0 | 1.0 | 0.5 | 84.5 | 0 |
| Comparative Example 3 | 0 | 0 | 0 | 0.5 | 0 | 0 | 1 | 10.0 | 3.0 | 1.0 | 0.5 | 84.0 | 2 |
| Comparative Example 4 | 0 | 0 | 0 | 0 | 2.0 | 0 | 4 | 10.0 | 3.0 | 1.0 | 0.5 | 79.5 | 2 |
| Comparative Example 5 | 0 | 0 | 0 | 0 | 0 | 3.0 | 8 | 10.0 | 3.0 | 1.0 | 0.5 | 74.5 | 2.7 |
| Comparative Example 6 | 4.0 | 0 | 0 | 0 | 0 | 0 | 0 | 10.0 | 3.0 | 1.0 | 0.5 | 81.5 | 0 |
| Comparative Example 7 | 0 | 8.0 | 0 | 0 | 0 | 0 | 28 | 10.0 | 3.0 | 1.0 | 0.5 | 49.5 | 3.5 |

### [2] Testing

### [2-1] Viscosity

The ink jet inks of the above Examples and Comparative Examples were each subjected to viscosity determination and graded according to the criteria below. The viscosity was measured using MCR-300 rheometer (Pysica) at 25°C and by increasing the Shear Rate from 10 [s⁻¹] to 1000 [s⁻¹] and reading the viscosity at a Shear Rate of 200. Grades of C or better were considered good levels.
A: The viscosity is 2.0 mPa·s or more and less than 5.0 mPa·s.
B: The viscosity is 5.0 mPa·s or more and less than 10 mPa·s.
C: The viscosity is 10 mPa·s or more and less than 20 mPa·s.
D: The viscosity is 20 mPa·s or more and less than 30 mPa·s.
E: The viscosity is 30 mPa·s or more.

### [2-2] Color Strength

The ink jet inks of the above Examples and Comparative Examples were each ejected in a predetermined pattern to a piece of cotton fabric as a recording medium using PX-M860F recording apparatus (Seiko Epson).

An iron as a heater was brought into contact with the side of the recording medium having attached ink jet ink thereon. The surface of the recording medium was heated at 150°C × 20 seconds, giving a recording.

Each of the resulting recordings was tested for color strength. Specifically, in the course of the production of the recording as described above, chromaticity was measured using i1 (X-rite) at a point of the recording medium having attached ink jet ink thereon after the attachment of ink jet ink and before heating. The finished recording, obtained as described above, was also subjected to the measurement of chromaticity at the corresponding point in the same way, and the percentage increase, from before to after heating, in saturation as measured in the L*a*b* color space (√(a*^2 + b*^ 2)) was determined. Optical density (OD) at a point of the recording having attached ink jet ink thereon was determined at the same time, and grading was carried out according to the criteria below. Greater percentage increases in saturation and larger ODs indicate the recording is better in color strength. Grades of C or better were considered good levels.
A: The percentage increase in saturation is 50% or more, and the OD is 0.5 or more.
B: The percentage increase in saturation is 30% or more and less than 50%, and the OD is 0.5 or more.
C: The percentage increase in saturation is 15% or more and less than 30%, and the OD is 0.5 or more.
D: The percentage increase in saturation is 0% or more and less than 15%, and the OD is 0.5 or more.
E: Saturation decreased from that before heating, or the OD is less than 0.5.

Color strength testing was performed in the same way except that the recording medium was changed to a piece of polyester fiber fabric, a piece of mixed fabric of polyester fiber and cotton fiber, a piece of silk fabric, a piece of polyurethane fabric, a piece of acrylic fabric, or a piece of polyamide fiber fabric.

### [2-3] Color Strength with Sublimation Transfer

The ink jet inks of the above Examples and Comparative Examples were each ejected in a predetermined pattern to a sheet of TRANSJET Classic (Cham Paper), which was an intermediate transfer medium, using PX-M860F recording apparatus (Seiko Epson).

Then the side of the intermediate transfer medium having attached ink jet ink thereon was brought into close contact with a piece of polyester fabric, which was the recording medium. In that state, sublimation transfer was carried out under 200°C × 60 seconds conditions using a heat press (TP-608M, Taiyoseiki) to give a recording.

Each of the resulting recordings was tested for color strength. Specifically, in the course of the production of the recording as described above, chromaticity was measured using i1 (X-rite) at a point of the intermediate transfer medium having attached ink jet ink thereon after the attachment of ink jet ink and before heating. The finished recording, obtained as described above, was also subjected to the measurement of chromaticity at the corresponding point in the same way, and the percentage increase, from before to after heating, in saturation as measured in the L*a*b* color space was determined. OD at a point of the recording having attached ink jet ink thereon was determined at the same time, and grading was carried out according to the criteria below. Greater percentage increases in saturation and larger ODs indicate the recording is better in color strength. Grades of C or better were considered good levels.
A: The percentage increase in saturation is 50% or more, and the OD is 0.5 or more.
B: The percentage increase in saturation is 30% or more and less than 50%, and the OD is 0.5 or more.
C: The percentage increase in saturation is 15% or more and less than 30%, and the OD is 0.5 or more.
D: The percentage increase in saturation is 0% or more and less than 15%, and the OD is 0.5 or more.
E: Saturation decreased from that before heating, or the OD is less than 0.5.

### [2-4] Fixation

The recordings of the above Examples and Comparative Examples produced with a piece of cotton fabric as the recording medium in [2-2] above were washed in warm water at 40°C in a home washing machine (Toshiba Lifestyle Products & Services TW-Z9500L front-loader washing and drying machine) in its standard mode using a laundry detergent (Lion TOP Clear Liquid). The percentage decrease, from before to after washing, in the OD of the dye print was determined and graded according to the criteria below. Smaller percentage decreases in OD indicate the recording is better in the fixation of the dye print formed by the ink jet ink to the recording medium. Grades of C or better were considered good levels.
A: The percentage decrease in OD is less than 3%.
B: The percentage decrease in OD is 3% or more and less than 10%.
C: The percentage decrease in OD is 10% or more and less than 30%.
D: The percentage decrease in OD is 30% or more and less than 50%.
E: The percentage decrease in OD is 50% or more.

The results of these is summarized in Tables 3 and 4.

### [Table 3]

**Table 3**

| | Viscosity | Color strength | | | | | | | Color strength with sublimation transfer | Fixation |
|---|---|---|---|---|---|---|---|---|---|---|
| | | Cotton fabric | Polyester fiber fabric | Mixed fabric of polyester fiber and cotton fiber | Silk fabric | Polyurethane fabric | Acrylic fabric | Polyamide fiber fabric | | |
| Example 1 | A | A | A | A | A | A | A | A | A | C |
| Example 2 | B | A | A | A | A | A | A | A | A | A |
| Example 3 | B | A | A | A | A | A | A | A | A | A |
| Example 4 | B | A | A | A | A | A | A | A | A | A |
| Example 5 | B | B | A | B | B | B | B | B | A | A |
| Example 6 | B | B | A | B | B | B | B | B | A | B |
| Example 7 | B | A | A | A | A | A | A | A | A | A |
| Example 8 | B | B | A | B | B | B | B | B | A | A |
| Example 9 | C | A | A | A | A | A | A | A | A | A |
| Example 10 | C | B | A | B | B | B | B | B | A | A |
| Example 11 | B | A | A | A | A | A | A | A | A | A |
| Example 12 | C | B | A | B | B | B | B | B | A | A |

### [Table 4]

**Table 4**

| | Viscosity | Color strength | | | | | | | Color strength with sublimation transfer | Fixation |
|---|---|---|---|---|---|---|---|---|---|---|
| | | Cotton fabric | Polyester fiber fabric | Mixed fabric of polyester fiber and cotton fiber | Silk fabric | Polyurethane fabric | Acrylic fabric | Polyamide fiber fabric | | |
| Comparative Example 1 | B | E | B | E | E | E | E | E | E | A |
| Comparative Example 2 | B | E | A | E | E | E | E | D | A | E |
| Comparative Example 3 | B | D | A | D | D | D | D | D | A | D |
| Comparative Example 4 | B | E | A | E | E | E | E | E | A | D |
| Comparative Example 5 | B | E | A | E | E | E | E | E | A | D |
| Comparative Example 6 | A | E | A | E | E | E | E | E | A | E |
| Comparative Example 7 | C | E | A | E | E | E | E | E | A | A |

As is clear from Tables 3 and 4, the results were good in the present invention. In the Comparative Examples, by contrast, the results were unsatisfactory.

Recordings were produced in the same way except that the recording medium was a sheet of paper made of cellulose fiber, and the results were the same. Recordings were produced in the same way except that the heating temperature in the heating step was changed within the range of 100°C to 160°C, and the duration of heating was changed within the range of 0.2 seconds to 300 seconds, and the results were the same. Attempts were made to produce recordings in the same way as in [2-2] above except for the use of a piece of polyurethane fabric, a piece of acrylic fabric, or a piece of polyamide fiber fabric as the recording medium and for a change of the conditions of heating of the recording medium with ink jet ink attached thereto to 200°C × 60 seconds. With wool fabric, the recording medium scorched when heated, and with polyamide fiber fabric, the recording medium melted when heated. Testing was impossible in these cases.

The ink jet inks of the above Examples were each used to produce recordings in the same way as in [2-2] above except that the recording medium was a piece of paper, a sheet of glass, a sheet of stainless steel, a tile board as a type of ceramic, a polycarbonate dense board, or a Japanese cypress *(hinoki)* board as a type of wood, and the heating temperature was changed to 200°C. All recordings displayed good color strength and were found to be superior in the adhesion of the record to the recording medium.

## Claims

1. An aqueous ink jet composition comprising:
at least one disperse dye;
polyester; and
water,
wherein the content of the polyester in the aqueous ink jet composition is higher than or equal to 4 times and lower than or equal to 300 times the content of the at least one disperse dye in the aqueous ink jet composition, and
**characterized in that** the at least one disperse dye comprises C.I. Disperse Orange 60.

2. The aqueous ink jet composition according to Claim 1, wherein the polyester content is 5% by mass or more and 30% by mass or less.

3. The aqueous ink jet composition according to Claim 1 or 2, wherein the dye content is 0.1% by mass or more and 7.5% by mass or less.

4. The aqueous ink jet composition according to Claim 3, wherein the dye content is 0.1% by mass or more and 3% by mass or less.

5. The aqueous ink jet composition according to any one of Claims 1 to 4, wherein:
the polyester is contained in particulate form, and
an average diameter of particles of the polyester is 20 nm or more and 300 nm or less.

6. A method for producing a recording, the method comprising: an attachment step, in which the aqueous ink jet composition according to any one of Claims 1 to 5 is ejected by ink jet technology and attached to a recording medium; and
a heating step, in which the recording medium with the aqueous ink jet composition attached thereto is heated.

7. The method according to Claim 6 for producing a recording, wherein the recording medium is a piece of fabric.

8. The method according to Claim 6 or 7 for producing a recording, wherein the recording medium is one made of at least one material including one or two or more selected from the group consisting of silk, wool, cellulose, acrylic, polyurethane, and polyamide.

9. The method according to Claim 6 or 7 for producing a recording, wherein the recording medium is one made of materials including polyester and one or two or more selected from the group consisting of cotton, silk, polyamide, acrylic fiber, and polyurethane.

10. The method according to any one of Claims 6 to 9 for producing a recording, wherein a temperature at which the recording medium is heated in the heating step is 100°C or more and 160°C or less.

## Patentansprüche

1. Wässrige Zusammensetzung für Tintenstrahldrucker, umfassend:
mindestens einen Dispersionsfarbstoff;
Polyester; und
Wasser,
wobei der Gehalt des Polyesters in der wässrigen Zusammensetzung für Tintenstrahldrucker höher oder gleich einem Vierfachen und kleiner oder gleich einem 300-Fachen des Gehalts des mindestens einen Dispersionsfarbstoffs in der wässrigen Zusammensetzung für Tintenstrahldrucker ist und
**dadurch gekennzeichnet, dass** der mindestens eine Dispersionsfarbstoff C.I. Disperse Orange 60 umfasst.

2. Wässrige Zusammensetzung für Tintenstrahldrucker nach Anspruch 1, wobei der Polyestergehalt 5 Masse-% oder mehr und 30 Masse-% oder weniger ist.

3. Wässrige Zusammensetzung für Tintenstrahldrucker nach Anspruch 1 oder 2, wobei der Farbstoffgehalt 0,1 Masse-% oder mehr und 7,5 Masse-% oder weniger ist.

4. Wässrige Zusammensetzung für Tintenstrahldrucker nach Anspruch 3, wobei der Farbstoffgehalt 0,1 Masse-% oder mehr und 3 Masse-% oder weniger ist.

5. Wässrige Zusammensetzung für Tintenstrahldrucker nach einem der Ansprüche 1 bis 4, wobei:
der Polyester in Teilchenform beinhaltet ist und
ein durchschnittlicher Durchmesser von Teilchen des Polyesters 20 nm oder mehr und 300 nm oder weniger ist.

6. Verfahren zum Erzeugen einer Aufzeichnung, wobei das Verfahren umfasst: einen Anhaftungsschritt, in dem die wässrige Zusammensetzung für Tintenstrahldrucker nach einem der Ansprüche 1 bis 5 durch Tintenstrahltechnologie ausgestoßen und an ein Aufzeichnungsmedium geheftet wird; und
einen Erhitzungsschritt, in dem das Aufzeichnungsmedium mit der daran anhaftenden wässrigen Zusammensetzung für Tintenstrahldrucker erhitzt wird.

7. Verfahren nach Anspruch 6 zum Erzeugen einer Aufzeichnung, wobei das Aufzeichnungsmedium ein Stück Stoff ist.

8. Verfahren nach Anspruch 6 oder 7 zum Erzeugen einer Aufzeichnung, wobei das Aufzeichnungsmedium aus mindestens einem Material hergestellt ist, das eines oder zwei oder mehr enthält, die ausgewählt sind aus der Gruppe bestehend aus Seide, Wolle, Zellulose, Acryl, Polyurethan und Polyamid.

9. Verfahren nach Anspruch 6 oder 7 zum Erzeugen einer Aufzeichnung, wobei das Aufzeichnungsmedium aus Materialien hergestellt ist, die Polyester und eines oder zwei oder mehr enthalten, die ausgewählt sind aus der Gruppe bestehend aus Baumwolle, Seide, Polyamid, Acrylfaser und Polyurethan.

10. Verfahren nach einem der Ansprüche 6 bis 9 zum Erzeugen einer Aufzeichnung, wobei eine Temperatur, bei der das Aufzeichnungsmedium in dem Erhitzungsschritt erhitzt wird, 100°C oder mehr und 160°C oder weniger beträgt.

## Revendications

1. Composition aqueuse pour jet d'encre comprenant :
au moins un colorant dispersé ;
du polyester ; et
de l'eau,
dans laquelle la teneur en polyester dans la composition aqueuse pour jet d'encre est supérieure ou égale à 4 fois et inférieure ou égale à 300 fois la teneur de l'au moins un colorant dispersé dans la composition aqueuse pour jet d'encre, et
**caractérisée en ce que** l'au moins un colorant dispersé comprend du C.I. Disperse Orange 60.

2. Composition aqueuse pour jet d'encre selon la revendication 1, dans laquelle la teneur en polyester est de 5 % en masse ou plus et de 30 % en masse ou moins.

3. Composition aqueuse pour jet d'encre selon la revendication 1 ou 2, dans laquelle la teneur en colorant est de 0,1 % en masse ou plus et de 7,5 % en masse ou moins.

4. Composition aqueuse pour jet d'encre selon la revendication 3, dans laquelle la teneur en colorant est de 0,1 % en masse ou plus et de 3 % en masse ou moins.

5. Composition aqueuse pour jet d'encre selon l'une quelconque des revendications 1 à 4, dans laquelle :
le polyester est contenu sous forme de particules, et
un diamètre moyen des particules du polyester mesure 20 nm ou plus et 300 nm ou moins.

6. Procédé de production d'un enregistrement, le procédé comprenant : une étape de fixation, dans laquelle la composition aqueuse pour jet d'encre selon l'une quelconque des revendications 1 à 5 est éjectée par une technologie à jet d'encre et fixée sur un support d'enregistrement ; et
une étape de chauffage, dans laquelle le support d'enregistrement avec la composition aqueuse pour jet d'encre fixée sur celui-ci est chauffé.

7. Procédé selon la revendication 6, pour la production d'un enregistrement, dans lequel le support d'enregistrement est une pièce de tissu.

8. Procédé selon la revendication 6 ou 7, pour la production d'un enregistrement, dans lequel le support d'enregistrement est constitué d'au moins un matériau incluant l'un ou plusieurs des matériaux sélectionnés dans le groupe comprenant la soie, la laine, la cellulose, l'acrylique, le polyuréthane et le polyamide.

9. Procédé selon la revendication 6 ou 7, pour la production d'un enregistrement, dans lequel le support d'enregistrement est constitué de matériaux incluant le polyester et l'un ou plusieurs des matériaux sélectionnés dans le groupe comprenant le coton, la soie, le polyamide, la fibre acrylique et le polyuréthane.

10. Procédé selon l'une quelconque des revendications 6 à 9, pour la production d'un enregistrement, dans lequel une température à laquelle le support d'enregistrement est chauffé dans l'étape de chauffage s'élève à 100 °C ou plus et à 160 °C ou moins.
